# EUROPEAN PATENT APPLICATION

(11) **EP 1 914 135 A1**
(43) Date of publication of application: **23.04.2008**
(21) Application number: 07118594.6
(22) Date of filing: 16.10.2007
(51) Int. Cl.: B60T 8/52, F16D 55/36, F16D 66/00, F16D 66/02, G01B 7/16

(54) **Wear compensated torque measurement system**

(30) Priority: 18.10.2006 US 829951 P; 21.09.2007 US 859113
(71) Applicant: Goodrich Corporation, Charlotte, North Carolina 28217-4578 (US)
(72) Inventor: Cahill, Eric D., Troy, OH 45373 (US); Brundrett, Robert L., Troy, OH 45373 (US)
(74) Representative: Hilleringmann, Jochen

(57) **Abstract**

A braking system including a torque tube (22) and a rotor-stator stack (27), wherein the torque tube at least partially deforms during braking. The torque tube includes a passage (52) formed in therein, and a displacement sensor (54) is placed with the passage, wherein the displacement sensor detects deformation of the torque tube. The signal can be used as a measure of actual braking torque applied to the one or more wheels. The braking system includes a wear compensator (60) that alters a torque arm of said displacement sensor (54) based on brake wear.

## Description

### Related Application Data

This application claims priority of U.S. Provisional Application No. 60/829,951 filed on October 18, 2006, which is incorporated herein by reference in its entirety.

### Field of the Invention

The present invention relates generally to a brake for a vehicle and, more particularly, to a device and method for measuring an amount of braking torque applied to a wheel, and compensating the measured braking torque based on brake wear.

### Background of the Invention

Aircraft wheel and brakes heretofore have included a non-rotatable wheel support, a wheel rotatably mounted to the wheel support, and a brake disk stack having alternating rotor and stator disks mounted with respect to the wheel support and wheel for relative axial movement. Each rotor disk is coupled to the wheel for rotation therewith and each stator disk is coupled to the wheel support against rotation. A back plate is located at the rear end of the disk pack and a brake head is located at the front end. The brake head may house a plurality of actuator rams that extend to compress the brake disk stack against the back plate. Torque is taken out by the stator disks through a static torque tube or the like.

Actuation of the actuator rams typically is under the control of a brake control system. Generally, the brake control system receives numerous inputs (e.g., the brake command from the pilot, speed of the wheel, torque applied by the brakes, etc.) and, using these inputs, the brake control system commands the actuator rams to apply a force so as to press the stators and rotors into contact with one another to satisfy the brake command, yet preventing skid or lockup of the wheels due to excessive braking torque.

Brake control systems that use actual torque as an input to the control computer have been shown to have improved precision of control. Thus, it is desirable for brake control systems to have available direct torque readings from the brake being controlled so as to provide the highest degree of accuracy of the requested braking by the pilot.

### Summary of the Invention

The present invention enables the accurate and direct measurement of braking torque applied to the wheels of a vehicle, such as an aircraft, for example. Measurement of the braking torque can be obtained by monitoring a bending or twisting action in a torque tube of the braking system, wherein the amount of bending or twisting can be correlated to the actual braking force applied to the wheels. The bending or twisting motion can be detected by a sensor located at least partially in the torque tube, such that when the torque tube bends or twists, the sensor measures the actual bending or twisting of the torque tube.

According to one aspect of the invention, there is provided a braking system including a torque tube and a rotor-stator stack, wherein the torque tube at least partially deforms during braking. The braking system further includes a passage formed in the torque tube, and a displacement sensor in said passage, wherein the displacement sensor detects deformation of the torque tube.

In one embodiment, the displacement sensor is an elongated member in contact with at least one passage surface at axially spaced apart locations.

In one embodiment, the displacement sensor includes a proximal end and a distal end, said proximal end being rigidly fastened with respect to said torque tube, and said distal end being supported by at least one passage surface.

In one embodiment, the passage is at least one of a bore, slot, groove, or cavity.

In one embodiment, the passage is formed along an outer perimeter of said torque tube.

In one embodiment, the displacement sensor includes a displacement measurement device located between a proximal and a distal end of the displacement sensor, and wherein deformation of the torque tube causes the distal end to bend with respect to the proximal end so as to cause the displacement measurement device to generate signal indicative of said deformation.

In one embodiment, the displacement measurement device is a MEMS based device.

In one embodiment, the displacement measurement device is located at the proximal end of said displacement sensor such that heat transfer from the rotor-stator stack to the displacement measurement device is minimized.

In one embodiment, the passage is accessible from an outer surface of said torque tube.

In one embodiment, the braking system includes an actuator housing configured to receive said displacement sensor, wherein said torque tube and said displacement sensor are rigidly fixed to said housing.

In one embodiment, the braking system includes a temperature sensor operatively configured to provide a signal indicative of a temperature of said displacement sensor.

In one embodiment, the braking system includes a wear compensator that alters a torque arm of said displacement sensor based on brake wear.

In one embodiment, the wear compensator is an elongated member operatively configured to move with at least one of the stator, rotor and/or an actuator, and wherein said movement changes the torque arm of the displacement sensor.

In one embodiment, the braking system includes a wear sensor, wherein the wear sensor measures an amount of rotor-stator wear and provides a signal indicative of said wear.

In one embodiment, the wear signal is an electronic signal.

In one embodiment, the braking system includes a brake pedal for providing a braking reference signal; an actuator for compressing said rotor-stator stack; and a brake controller operatively configured to receive the braking reference signal and a displacement signal from the displacement sensor, said displacement signal indicative of an amount of deformation of the torque tube, wherein said brake controller generates a braking control signal based on the braking reference signal and the displacement signal, and said actuator compresses the rotor-stator stack based on said braking control signal.

In one embodiment, the displacement sensor does not extend into a wear zone of the rotor-stator stack.

According to another aspect of the invention, there is provided a method of detecting a braking force applied by a braking system, the braking system including a torque tube and a rotor-stator stack, wherein the torque tube at least partially deforms during braking. The method include the steps of measuring the deformation of the torque tube, and generating a signal indicative of said deformation.

In one embodiment, measuring the deformation includes the step of measuring a deflection of an elongated member located in a passage of the torque tube.

In one embodiment, the method further includes altering a torque arm applied to the elongated member based on wear of the rotor-stator stack.

In one embodiment, the method includes using a displacement measuring device to measure the deformation; measuring a temperature of the displacement measuring device; and compensating the measured deformation based on the measured temperature.

In one embodiment, the method further includes measuring an amount of wear of the rotor-stator stack; and providing said measurement to a brake controller, wherein said brake controller generates a braking command signal based on said measured wear.

According to another aspect of the invention, there is provided a displacement sensor operatively configured to reside within a passage of a torque tube. The displacement sensor includes an elongated member having a proximal end and a distal end, a displacement measurement device located between said proximal and distal ends, a securing structure for maintaining the proximal end in a substantially constant positional relationship with respect to one end of the torque tube, and a support structure for maintaining the distal end in a substantially constant positional relationship with the passage.

To the accomplishment of the foregoing and related ends, the invention, then, comprises the features hereinafter fully described and particularly pointed out in the claims. The following description and the annexed drawings set forth in detail certain illustrative embodiments of the invention. These embodiments are indicative, however, of but a few of the various ways in which the principles of the invention may be employed.

### Brief Description of the Drawings

Fig. 1 is a cross-sectional view of an exemplary aircraft brake.
Fig. 2 is an axial end view of the brake of Fig. 1.
Fig. 3 is a schematic diagram of an exemplary aircraft brake control system.
Fig. 4a is a cross sectional view of the an exemplary brake system in accordance with the invention.
Fig. 4B is a perspective view of an exemplary torque tube and sensor in accordance with the invention.
Fig. 4C is a cross-sectional view of another exemplary torque tube in accordance with the invention
Fig. 5A is a perspective view of an exemplary displacement sensor in accordance with the invention.
Fig. 5B illustrates an exemplary mounting of a displacement sensor within a torque tube (torque tube shown in cross-section) in accordance with the invention.
Fig. 6A is an exemplary schematic diagram of a brake wear compensator in accordance with the invention.
Fig. 6B is a side view of an new brake disk stack using the brake wear compensator of Fig. 6A.
Fig. 6C is a side view of a worn brake disk stack using the brake wear compensator of Fig. 6A.

### Detailed Description

Because the invention was conceived and developed for use in an aircraft braking system, it will be herein described chiefly in this context. However, the principles of the invention in their broader aspects can be adapted to other types of braking systems, such as in train brake systems or earth moving vehicle brake systems, for example.

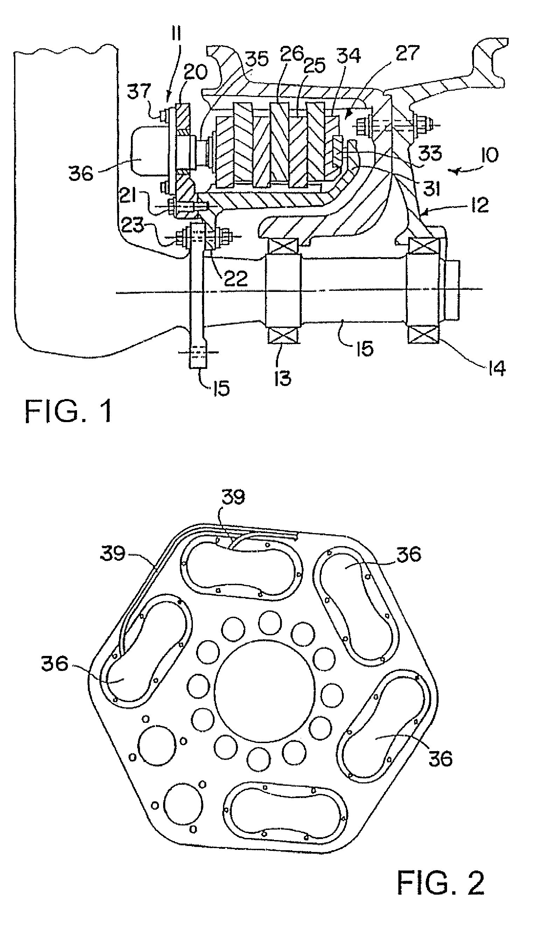

Referring now in detail to the drawings and initially to Fig. 1, a wheel and brake is generally indicated at 10. The assembly 10 generally comprises a brake 11 and an aircraft wheel 12 which is supported for rotation by bearings 13 and 14 on an axle 15. The axle 15 forms a wheel mount and is attached to the end of an aircraft landing gear strut (not shown) or a truck attached to the end of a landing gear strut.

The brake 11 includes a brake head or housing 20 which is attached by bolt fasteners 21 to a torque tube 22, which in turn is attached by bolt fasteners 23 to a torque take-out flange on the axle 15. Although the invention is being illustrated in the context of a flange mounted type of brake, the principles of the invention may be applied to other types of brakes such as to a torque lug type of brake as will be appreciated by those skilled in the art. The illustrated brake head is a generally planar disk-like plate member having a bolt circle surrounding a central opening as best shown in Figs. 1 and 2.

The torque tube 22 is surrounded by stationary brake elements and rotary brake elements that are interleaved. The stationary and rotary brake elements are in the form of stator disks 25 and rotor disks 26, and the interleaved arrangement thereof is commonly referred to as a brake disk stack, the same being designated by reference numeral 27. The stator disks 25 are splined to the torque tube and the rotor disks 26 are splined to the wheel 12 interiorly of the wheel's rim. As is conventional, the splined connection may be effected by a plurality of spline or drive keys that are spaced around the circumference of the rim/torque tube to permit axial movement of the rotor/stator disks while being held to the wheel/torque tube against relative rotation.

The disk stack 27 is located between a back pressure member 31 and the brake head 20. The back pressure member 31 is formed by a radial flange at the outer end of the torque tube 22. The radial flange carries thereon a plurality of circumferentially spaced torque pucks 33 engaged with the last brake disk 34 at the rear end of the disk stack 27. The torque pucks 33 may be attached in a known manner to the radial flange 31 by several torque pucks which have the stems thereof loosely fitted in holes in the radial flange to permit some swiveling movement thereof. The torque pucks in the illustrated embodiment secure the last brake disk 34 against rotation relative to the torque tube. In a modified arrangement, the radial flange could be configured to engage directly the disk pack, and still other arrangements could be used.

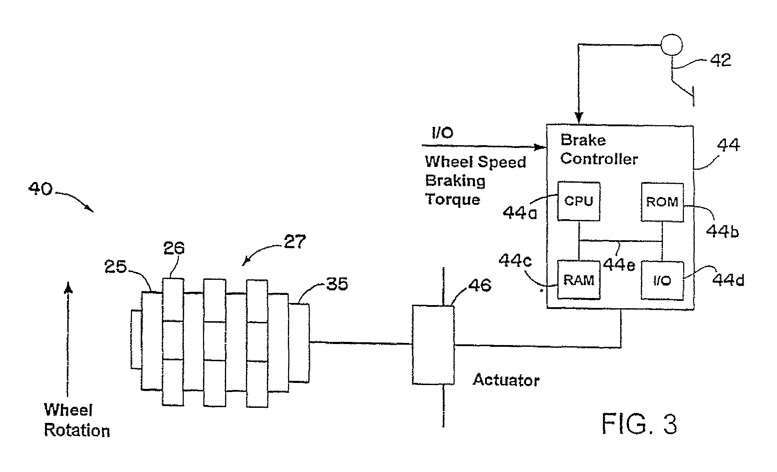

Pressure is applied to the front end of the disk stack 27 by one or more disk engaging members which in the illustrated embodiment are the inboard ends of one or more actuator rams 35. The actuator rams 35 are included in respective actuator modules 36 mounted to the brake head 20 by removable bolt fasteners 37 or other suitable means enabling quick and easy attachment and detachment of the actuator modules to and from the brake head. As shown in Fig. 2, a plurality of the actuator modules 36 are mounted in a circular arrangement around the rotational axis of the wheel, preferably with the actuator rams circumferentially equally spaced apart. The actuator modules each have extending therefrom a cable 39 (only two shown) for effecting electrical connection to a brake controller 44, as described below with respect to Fig. 3. It is noted that while the brake is described with respect to an electric braking system and electric actuator means, the brake may be implemented using other actuator means (e.g., hydraulic, pneumatic, etc.).

Referring to Fig. 3, an exemplary schematic diagram of an aircraft brake control system 40 is shown. The system 40 includes a brake pedal 42 located in the aircraft, wherein the brake pedal 42 generates a signal proportional to an amount of pedal deflection or desired braking force. The signal generated by the brake pedal 42 is provided to a brake controller 44, which also receives data relating to the wheels and brakes 10 (e.g., wheel speed, brake torque, brake temperature, etc.). The brake controller 44 can include a microprocessor 44a, read only memory (ROM) 44b, random access memory (RAM) 44c, and input/output module 44d, each of which are communicatively coupled via a system bus 44e or the like. A braking program can reside in ROM 44b and can be executed by the microprocessor 44a so as to implement a braking function.

The brake controller 44 is operatively coupled to an actuator 46, such as one or more hydraulic valves, electric motors, or the like, which in turn drive respective actuator rams 35. Based on a braking command from the pedal 42 and data relating to the wheel and brakes, the braking controller 44 provides a signal to the actuator 46 so as to implement the braking command while preventing wheel skid (antiskid control), control the deceleration of the wheel, or other speed related logic functions of brake control.

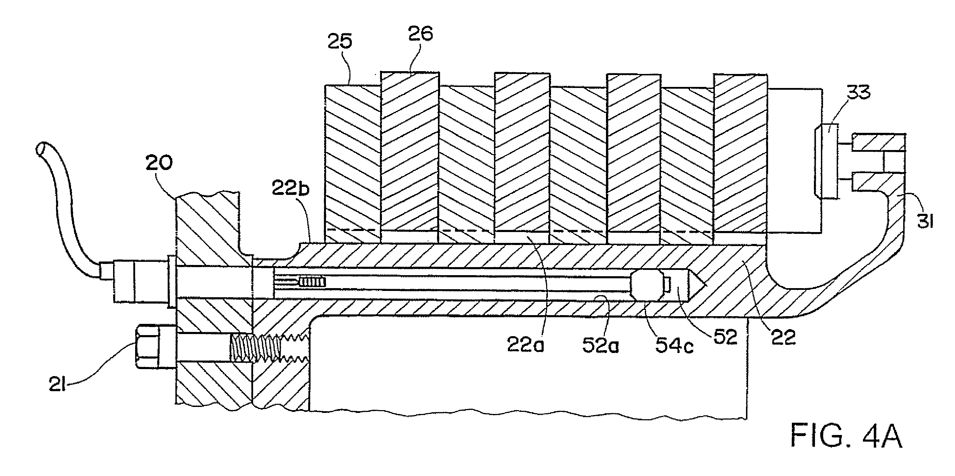

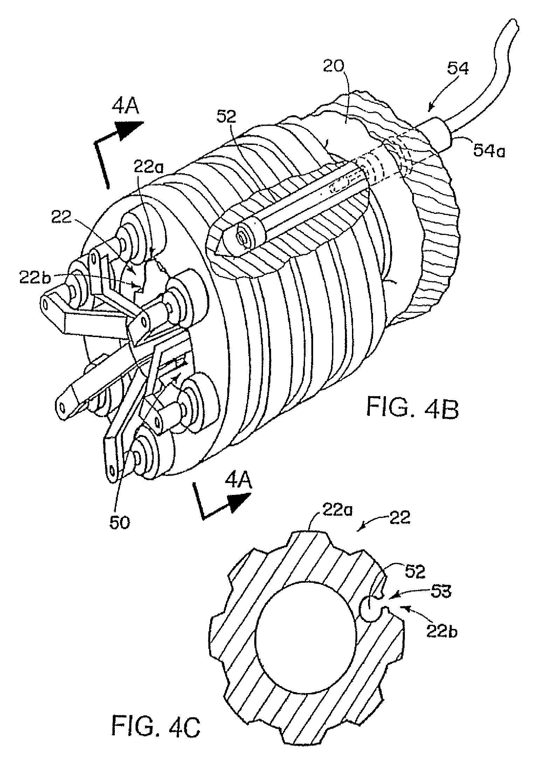

Referring now to Figs. 4A-4C, an exemplary torque tube 22 is shown in more detail. The torque tube 22 includes splines 22a running axially along the torque tube 22 that interface with corresponding mating splines or keys (not shown) of the stators 25. The torque tube 22 can be formed having a cylindrical shape, wherein a center portion 50 is open or hollow, or the torque tube 22 can be formed as a solid shaft. The torque tube 22, via bolt fasteners 21 or the like, is rigidly fixed to a support member, such as an the brake head or housing 20, for example, and includes a passage 52 formed along or near an outer radial surface 22b of the torque tube 22. The passage 52 can be formed completely within the torque tube 22 such that it may not be accessed along the outer radial surface 22b, or the torque tube 22 can include a groove 53 or the like that protrudes through the outer radial surface 22b of the torque tube 22 and into the passage 52, as shown in Fig. 4C.

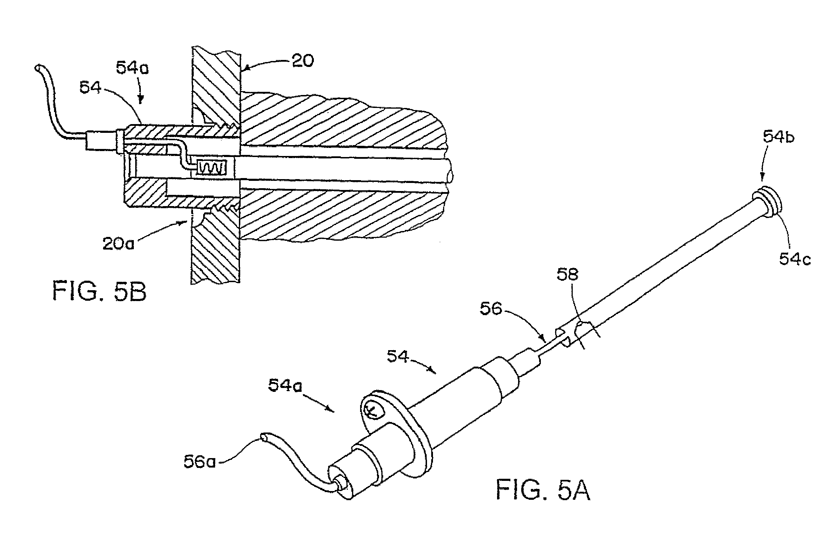

With further reference to Fig. 5A, an exemplary displacement sensor 54 is formed as an elongated shaft and resides within the passage 52 of the torque tube 22. The displacement sensor 54 can be formed from aluminum or other metals, for example. The displacement sensor 54 includes a proximal end 54a and a distal end 54b, wherein when inserted into the passage 52 of the torque tube 22, the proximal end 54a is rigidly fixed with respect to torque tube 22, e.g., it is coupled to the housing 20 via bolt fastener 21 or the like, and/or an interference fit is created between the proximal end 54a and the passage 52. Alternatively, and with reference to Fig. 5B, the proximal end 54a of the displacement sensor 54 and a bore 20a of the housing 20 can be threaded, wherein the threads of the proximal end 54a engage with threads of the bore 20a, thereby fixing the displacement sensor 54 to the housing 20 while at the same time eliminating the need for the bolt fastener 21 and/or the interference fit.

The distal end 54b of the displacement sensor 54 is supported by walls 52a of the passage 52 via a head 54c. The head 54c can be formed as an integral part of the displacement sensor 54 or as a separate piece that attaches to the displacement sensor 54. The head 54c interfaces with the walls 52a of the passage 52 such that the head 54c tightly fits in the passage 52 and supports the distal end 54b such that there is substantially no radial movement of the distal end 54b relative to the adjacent region of the passage 52. Preferably, a cross section of the head 54c is larger than a cross section of the portion of the displacement sensor 54 residing in the passage 52. Further, the head 54c can be deformable (e.g., a plastic or rubber material), such that when inserted into the passage 52, a tight fit is achieved. As will be appreciated, the material used to form the head 54c should be selected such that it can withstand the heat generated by the disk stack 27 during braking.

The displacement sensor 54 also includes a displacement measurement device 56, such as a strain gage or the like, wherein the displacement measurement device 56 is operatively coupled between the proximal end 54a and the distal end 54b of the displacement sensor 54. A cable 56a provides a means for electrically connecting the displacement measurement device 56 to other devices, such as the brake controller 44, for example. Preferably, the displacement measurement device 56 is located near the proximal end 54a of the displacement sensor 54. This is advantageous since it positions the displacement measurement device 56 away from the disk stack 27 (the stators 25 and rotors 26) and, thus, minimizes the amount of heat transferred from the disk stack 27 to the displacement measurement device 56. The displacement measurement device 56 can be formed as a conventional strain gage or as a micro-electro mechanical system (MEMS) device, for example.

In operation, as a braking force is applied to the wheel 12 (via the stators 25 and rotors 26), an equal force is applied to the torque tube 22. This force causes a twisting motion of the torque tube 22, and the displacement sensor 54, which resides in passage 52 of the torque tube 22, bends as the torque tube 22 twists. More specifically, the distal end 54b of the displacement sensor 54 moves or bends with respect to the proximal end 54a, and this bending is sensed by the displacement measurement device 56 The displacement measurement device 56, via the cable 56a, provides a signal indicative of the bending action of the displacement sensor 54 and, thus, indicative of an amount of torque applied to the wheel 12. This signal can be provided to other devices, such as the brake controller 44, for example.

As will be appreciated, variations in temperature of the displacement measurement device 56 can lead to non-linearities in the generated signal. Therefore, and as noted above, it is desirable to locate the displacement measurement device 56 such that heat transfer from the disk stack 27 to the sensor 56 is minimized. Locating the displacement measurement device 56 near the proximal end 54a of the displacement sensor 54 is one way in which heat transfer can be minimized. Heat transfer also may be minimized by selecting the materials for constructing the displacement sensor 54, the torque tube 22 and/or the displacement measurement device 56 such that heat transfer between these components is minimized.

Further, any non-linearities due to heating of the displacement measurement device 56 can be compensated by the brake controller 44. For example, a temperature sensor 58, such as a thermistor, a resistance temperature device (RTD), or the like, can be used to measure the temperature of the displacement measurement device 56, and this measurement can be provided to the brake controller 44. The brake controller 44 then can compensate the signal based on the actual temperature of the displacement measurement device 56, for example. Alternatively, the brake controller 44 may implement a temperature sensing circuit via software (e.g., a software thermal circuit), wherein a temperature of the sensor 56 is based on a duty cycle of the brakes 11 (e.g., the sensor is assumed to rise in temperature based on the braking force, braking time, wheel speed, etc., and fall in temperature when braking is or has not occurred for a predetermined time).

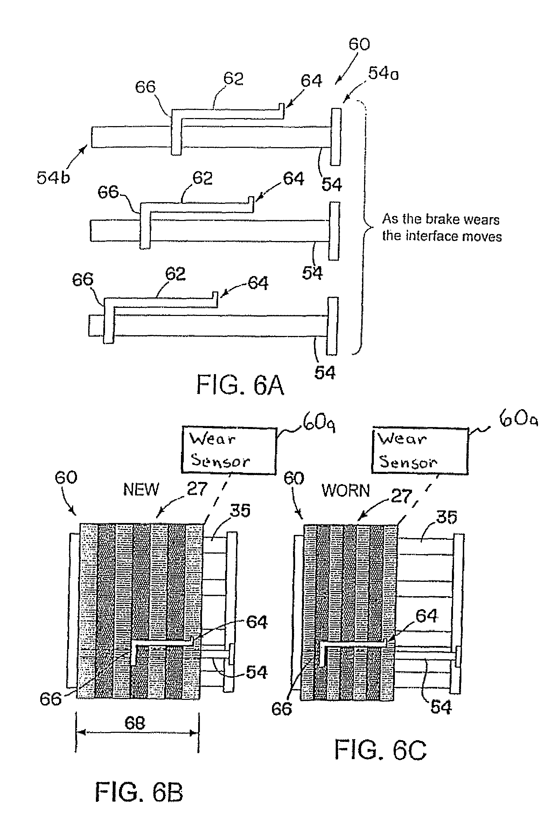

In addition to compensating for temperature variations in the displacement measurement device 56, compensations also may be made based on brake wear. For example, and with reference to Fig. 6A, there is shown an exemplary wear compensator system 60, wherein an elongated member 62 interfaces with the displacement sensor 54. The elongated member 62 includes a first end 64 operatively configured to move with a stator 25, rotor 26 or actuator RAM 35 (e.g., it can be directly or indirectly attached to the stator 25, rotor 26 and/or actuator RAM 35). As the disk stack 27 wears, the stators 25, rotors 26 and actuator ram 35 move axially along the torque tube 22 and, thus, the first end 64 (and therefore the elongated member 62) moves a distance proportional to the stator 25, rotor 26 and/or ram 35 movement. If the elongated member is configured to move with a stator, it is preferable that the first end 64 moves with the stator nearest the actuator ram 35. However, the elongated member may be configured to move with any rotor, stator, or rotor/stator interface.

A second end 66 of the elongated member 62 is configured as a support for the distal end 54b of the displacement sensor 54 (e.g., the second end 66 takes the place of the head 54c). For example, if the displacement sensor 54 is configured as a cylindrical rod having a diameter D1, then the second end 66 can be configured to include a bore having a diameter D2, wherein D2 is slightly larger than D1 so as to enable the displacement sensor 54 to move within the bore while encountering minimal resistance. Further, and as noted above, the outer radial surface 22b of the torque tube 22 can include a slot or groove 53 that extends at least partially into the passage 52. The slot or grove 53 enables the second end 66 to reside within the passage 52, while the elongated member 62 and the first end 64 remain outside the passage 52.

As the disk stack 27 wears over time, the stators 25 and rotors 26 move axially along the torque tube 22 away from the proximal end 54a of the displacement sensor 54. This movement also causes the first end 64 (and thus the second end 66) of the elongated member 62 to move axially along the torque tube 22. Since the displacement sensor 54 is fixed and cannot move axially, axial movement of the second end 66 with respect to the displacement sensor 54 has the effect of altering a torque arm of the displacement sensor 54. The variation in the torque arm of the displacement sensor 54 compensates for variations in twisting of the torque tube 22 (and thus the displacement sensor 54) due to brake wear.

Alternatively, the wear compensator may be configured as an electronic sensor 60a that detects or measures a position of the actuator ram 35 (or the stator or rotor) along the torque tube 22. Such a sensor can be any conventional sensor used to measure a position, including a resistance based device (e.g., a potentiometer) or one or more proximity sensors, for example. The sensor also may be configured to measure a thickness of the brake stack 27. The sensor can provide the measured data to the brake controller 44, which then electronically or via software compensates the signal provided by the displacement measuring device 56 in a manner similar to the mechanical system 60 described above.

Alternatively, wear compensation is not necessary if the displacement sensor 54 is not within a wear zone 68 of the of the disk stack 27. As used herein, a wear zone is defined as the axial region along the torque tube 22 that the disk stack 27 may occupy during normal operation. Thus, by implementing the displacement sensor 54 such that it does not extend into the wear zone, compensation due to brake wear is not necessary.

Corrections also can be performed by the brake controller 44 to compensate for a bending action of the housing 20. For example, as the actuator rams 35 apply pressure to the disk stack 27, the housing 20 bends in a radial direction. By measuring the amount of radial bend (e.g., via an additional measuring device in the displacement sensor 54), a signal indicative of the degree of bending can be provided to the brake controller 44, which then can compensate the torque signal based on the amount of bending.

Accordingly, a braking system has been disclosed that provides actual indication of braking force applied to the wheels. The system can be used to provide enhanced anti-skid control, thereby increasing the braking performance.

Although the invention has been shown and described with respect to a certain preferred embodiment or embodiments, it is obvious that equivalent alterations and modifications will occur to others skilled in the art upon the reading and understanding of this specification and the annexed drawings. In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein illustrated exemplary embodiment or embodiments of the invention. In addition, while a particular feature of the invention may have been described above with respect to only one or more of several illustrated embodiments, such feature may be combined with one or more other features of the other embodiments, as may be desired and advantageous for any given or particular application.

## Claims

1. A braking system including a torque tube (22) and a rotor-stator stack (27), wherein said torque tube at least partially deforms during braking, comprising:
a passage (52) formed in the torque tube; and
a displacement sensor (54) in said passage, wherein the displacement sensor detects deformation of the torque tube.

2. The system according to claim 1, wherein said displacement sensor is an elongated member in contact with at least one passage surface at axially spaced apart locations.

3. The system according to claims 1 or 2, wherein said displacement sensor includes a proximal end (54a) and a distal end (54b), said proximal end being rigidly fastened with respect to said torque tube, and said distal end being supported by at least one passage surface (52a).

4. The system according to any one of claims 1-3, wherein said passage is at least one of a bore, slot, groove, or cavity.

5. The system according to any one of claims 1-4, wherein said passage is formed along an outer perimeter of said torque tube.

6. The system according to any one of claims 1-5, wherein said displacement sensor includes a displacement measurement device (56) located between a proximal and a distal end of the displacement sensor, and wherein deformation of the torque tube causes the distal end to bend with respect to the proximal end so as to cause the displacement measurement device to generate signal indicative of said deformation.

7. The system according to claim 6, wherein said displacement measurement device is located at the proximal end of said displacement sensor such that heat transfer from the rotor-stator stack to the displacement measurement device is minimized.

8. The system according to any one of claims 1-7, wherein said passage is accessible from an outer surface of said torque tube.

9. The system according to any one of claims 1-8, further comprising an actuator housing (20) configured to receive said displacement sensor, wherein said torque tube and said displacement sensor are rigidly fixed to said housing.

10. The system according to any one of claims 1-9, further comprising a temperature sensor (58) operatively configured to provide a signal indicative of a temperature of said displacement sensor.

11. The system according to any one of claims 1-10, further comprising a wear compensator (60) that alters a torque arm of said displacement sensor based on brake wear.

12. The system according to claim 11, wherein the wear compensator is an elongated member (62) operatively configured to move with at least one of the stator, rotor and/or an actuator, and wherein said movement changes the torque arm of the displacement sensor.

13. The system according to any one of claims 1-12, further comprising a wear sensor (60a), wherein the wear sensor measures an amount of rotor-stator wear and provides a signal indicative of said wear.

14. The system according to any one of claims 1-13, further comprising:
a brake pedal (42) for providing a braking reference signal;
an actuator (46) for compressing said rotor-stator stack; and
a brake controller (44) operatively configured to receive the braking reference signal and a displacement signal from the displacement sensor, said displacement signal indicative of an amount of deformation of the torque tube,
wherein said brake controller generates a braking control signal based on the braking reference signal and the displacement signal, and said actuator compresses the rotor-stator stack based on said braking control signal.

15. The system according to any one of claims 1-14, wherein the displacement sensor does not extend into a wear zone of the rotor-stator stack.

16. A method of detecting a braking force applied by a braking system, said braking system including a torque tube (22) and a rotor-stator stack (27), wherein said torque tube at least partially deforms during braking, comprising:
measuring the deformation of the torque tube; and
generating a signal indicative of said deformation.

17. The method according to claim 16, wherein measuring the deformation includes the step of measuring a deflection of an elongated member located in a passage (52) of the torque tube.

18. The method according to claim 17, further comprising the step of altering a torque arm applied to the elongated member based on wear of the rotor-stator stack.

19. The method according to any one of claims 16-18, further comprising the steps of:
using a displacement measuring device to measure the deformation;
measuring a temperature of the displacement measuring device; and
compensating the measured deformation based on the measured temperature.

20. The method according to any one of claims 16-19, further comprising the steps of:
measuring an amount of wear of the rotor-stator stack; and
providing said measurement to a brake controller, wherein said brake controller generates a braking command signal based on said measured wear.

21. A displacement sensor (54) operatively configured to reside within a passage (52) of a torque tube (22), comprising:
an elongated member having a proximal end (54a) and a distal end (54b);
a displacement measurement device (56) located between said proximal and distal ends;
a securing structure for maintaining the proximal end in a substantially constant positional relationship with respect to one end of the torque tube; and
a support structure (54c) for maintaining the distal end in a substantially constant positional relationship with the passage.
